Europäisches Patentamt

European Patent Office

Office européen des brevets

(11) Publication number: **0 389 104 A1**

# EUROPEAN PATENT APPLICATION

(21) Application number: **90301838.0**

(22) Date of filing: **21.02.90**

(51) Int. Cl.⁵: **F16B 5/06, //E04G1/26, E04H15/64,B60P7/04**

(30) Priority: **21.02.89 GB 8903932**

(43) Date of publication of application:
**26.09.90 Bulletin 90/39**

(84) Designated Contracting States:
**AT BE CH DE DK ES FR GB GR IT LI NL SE**

(71) Applicant: **Urquhart, Peter John**
**2 Barrow Way, Amherst Hill, Riverhead**
**Sevenoaks, Kent TN13 2EL(GB)**

(72) Inventor: **Urquhart, Peter John**
**2 Barrow Way, Amherst Hill, Riverhead**
**Sevenoaks, Kent TN13 2EL(GB)**

(74) Representative: **Harvey, David Gareth et al**
**Graham Watt & Co. Riverhead**
**Sevenoaks Kent TN13 2BN(GB)**

(54) **Fastening flexible sheets.**

(57) Flexible fabric or plastics sheeting (24) is secured to a support structure by a fastening means comprising three elongated members, namely a body (10), a resilient, expandable gripper (12) and an expander (14). The body (10) has a channel (16) therealong opening via a restricted mouth (20) to a surface of the body (10); the sheeting to be secured is tucked into the channel followed by the gripper (12). The latter has an internal hollow (30) between two limbs (32) which, in use, are displaced outwardly apart from one another by the expander (14) which is inserted into the hollow (30). When the limbs are so displaced, they nip the sheeting (24) against the sides of the channel (16) establishing a firm, slippage-free hold on the sheeting.

Fig.1.

## FASTENING FLEXIBLE SHEETS

The present invention relates to fastening flexible sheets.

Flexible sheets such as canvas, tarpaulins and plastics sheetings are commonly lashed to supports by ropes and eyes. Such lashing means are far from ideal. Their provision is costly and their use time-consuming. They can weaken the sheets requiring local reinforcement and by their use the sheets are only fastened at intervals to a support. In situations where a sheet is exposed to wind, and is only secured at intervals along its edges, the wind can set the sheet flapping. This can cause annoyance and can well lead to tearing of the sheet. Despite the drawbacks of such lashing means, they are commonly used when flexible sheets are secured over truck loads and when such sheets are affixed to scaffolding as a screen or hoarding, e.g. when a facade of a building is being cleaned by water spray or grit blasting, or to hide a building site from view.

The present invention seeks to provide an improved sheet fastening means which is quick to use and avoids weakening the sheeting and the need for tying. Embodiments of the invention disclosed hereinafter provide a ready means whereby sheeting can be securely and expeditiously fastened to scaffolding or goods vehicles such as trucks. Moreover, the described embodiments are adaptable for use in erecting awnings, shelters, building structures and the like such as tunnel-type growing houses for horticulture. No doubt the fastening means will be useful in marine transport, e.g. for securing awnings or sheet coverings over cargo hatch covers.

The fastening means according to the invention are engageable with sheets either continuously along an entire edge or elsewhere, remote from an edge, e.g. across the middle of the sheet. Sheets secured in accordance with the invention are expected to be able to withstand storm-force winds or worse without detaching from the fastening means thanks to the security of fastening afforded along the fastening means.

According to the present invention, there is provided a flexible-sheet fastening means comprising three elongate interfitting members, namely a body, an expandable gripper and an expander for the gripper, the body having a channel therealong opening to a surface of the body via a restricted mouth which permits flexible sheeting to be tucked into the channel and the gripper and expander to be installed therein, the gripper having an internal hollow to receive the expander and two spaced-apart limbs extending therealong, and the expander being oversized relative to the internal hollow in use for expanding the gripper to deflect its limbs apart into a sheet-gripping relationship with sides of the channel in the body.

The invention also provides a method of fastening flexible sheeting using fastening means as defined in the preceding paragraph, wherein sheeting is laid across the mouth of the body and is tucked into the channel, for example commencing at one end of the body, the expandable gripper is pushed into the channel, for example progressively from one end, with its limbs projecting toward the mouth, and the expander is inserted, for example progressively from one end, into the hollow between the limbs to expand the gripper into a secure, sheet-gripping relationship with the channel.

Desirably, but not essentially, the body is a rigid metal member, for example a metal extrusion. It can take many forms, some of which are disclosed hereinafter.

Desirably, but not essentially, either or both the gripper and the expander is or are made of a resilient material, for example an elastomeric material. If the expander is elastomeric, it is desirably inserted into the gripper while tensioning it lengthwise so that, when the tension is released and the expander relaxes, its girth increases thereby enhancing the expansion of the gripper.

Security of fastening follows from the grip being exerted continuously along the length of the fastening means. Moreover, security of fastening is assured with the fastening means to be described since tension in the sheet to one or both sides of the sheet fastening means can result in the grip exerted by the coacting gripper and channel becoming stronger. In other words, the possibility of the sheet pulling free from the fastening means is effectively eliminated. This is especially beneficial where sheeting is buffeted by the wind or slipstream of a moving vehicle.

The invention comprehends a scaffolding structure for buildings, including scaffold members incorporating the fastening means defined hereinbefore and flexible sheeting secured thereto to form a temporary screen of the facade of a building.

The invention also comprehends a building structure comprising a framework and a flexible sheet covering, the framework incorporating the fastening means defined hereinbefore by which the sheet covering is secured in place.

The invention further comprehends a goods vehicle including a load platform operatively associated with which there is the fastening means defined hereinbefore, for fastening a load-covering sheeting over a load carried by the platform.

Assembling sheeting to the fastening means is straightforward following the method outlined above. It can be accomplished manually, without tools. It is, however, contemplated that the gripper and expander might be installed with the aid of a dispensing tool which feeds and pushes the gripper and expander into their respective operative positions.

Releasing sheeting from the fastening means is also quite straightforward. Simply, the expander is pulled up and out of the hollow in the gripper, starting from one end, and the gripper is likewise pulled from the body channel. It is not necessary to pull the expander wholly from the gripper, however, for having partially disengaged the former removal of the latter from the body can commence. Thus, disengagement of the expander and gripper becomes a simple two-handed matter while the workman moves along the length of the fastening means.

Embodiments of the invention will now be described in more detail by way of example with reference to the accompanying drawings, in which:

Fig. 1 is an exploded perspective view of a generalised form of sheet fastening means according to this invention;

Fig. 2 is a cross-sectional view through one specific embodiment of the invention;

Fig 3 is a cross-sectional view through another specific embodiment of the invention, and

Fig. 4 is a cross-sectional view through another specific embodiment of the invention.

Fastening means shown in the drawings are suitable for securing a variety of flexible sheetings to structures, including fabric and plastics sheetings as noted earlier. The fastening means can take a variety of forms and the shapes shown in the accompanying drawings must be understood to be merely illustrative and thus non-limitative.

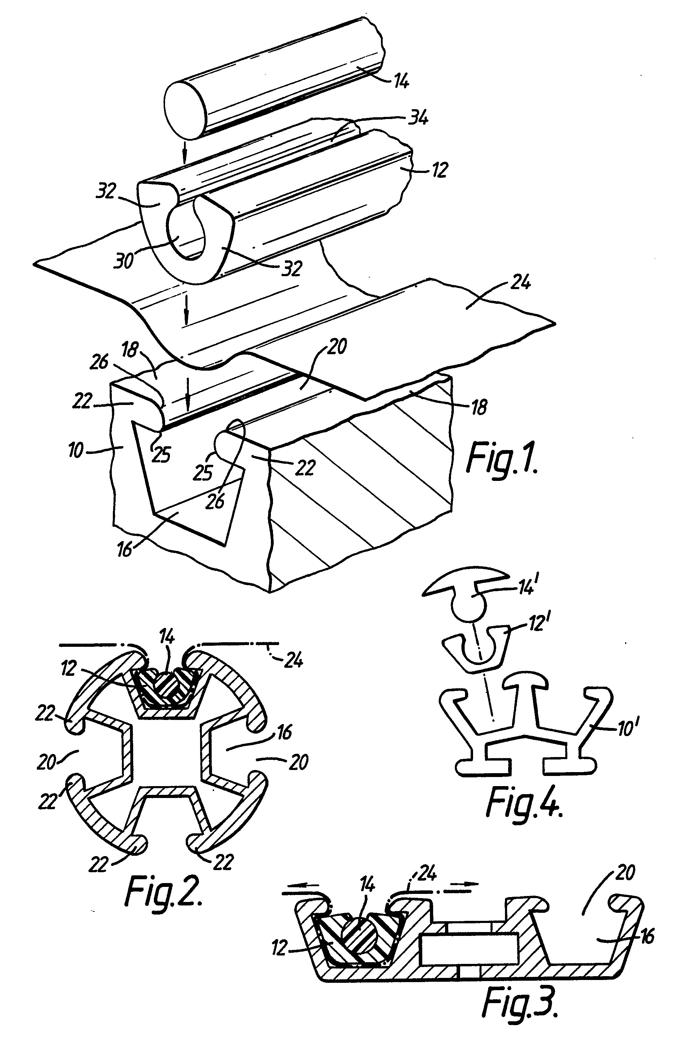

Fig. 1 shows, in exploded form, a generalised fastening means according to the invention. The fastening means comprise three elongate, interfitting members, namely a body 10, and expandable gripper 12 and an expander 14 for the latter.

Body 10 has an internal channel 16 extending along its length. This channel 16 opens to a surface 18 of the body via a restricted mouth 20. The restricted mouth 20 is defined in the illustrated examples between a pair of confronting, spaced-apart flanges or lips 22. These overlie the channel 16 and extend along the body parallel to one another. The mouth 20 can be regarded as a slot leading inwardly to an enlarged hollow space, within the body 10, which constitutes the channel 16. The channel 16 is to accommodate (i) sheeting 24 to be secured and (ii) the gripper 12 and expander 14. The flanges or lips 22 which surmount the channel 16 and partially enclose it in use serve to entrap the gripper 12 and expander 14 installed in the channel 16.

As shown in the drawings, the channel 16 is of dovetail shape or trapeziform, and the gripper 12 is shaped to suit it. The channel 16 could take many different shapes. The profile of the gripper 12 will be suitably varied so as to achieve the desired sheet clamping or gripping effect in coaction with the channel. By way of example, the channel could be oppositely tapered relative to the mouth 20, so as to be narrower adjacent the mouth than further therefrom. The channel 16 need not be bounded by straight or planar surfaces as shown. Its defining surfaces could be curved or a combination of curved and planar surfaces.

Internal and external corners 25, 26 of the flanges or lips 22 are rounded. This is to eliminate or substantially minimise the risk of damaging sheeting by contact with these corners.

The body 10 is made of any suitably strong and rigid material. Depending inter alia on dimensions, and loadings expected in service, the body could be moulded or extruded from plastics materials, e.g. fibre reinforced plastics. More generally, it will be made of metal, for instance extruded aluminium alloys.

In Fig. 1, the actual external profile of the body 10 is deliberately not shown since this is a matter of the designer's personal choice, coupled with the dictates of particular applications. No limitation is thus placed on the external profile. However, where there are external corners or edges contactable by the sheeting, they should be rounded.

The expandable gripper 12 has an internal hollow 30 formed between two spaced-apart limbs 32. Both the hollow 30 and the limbs 32 extend along the length of the gripper. Along its length, the gripper 12 has an opening 34 of restricted width leading to the hollow. The hollow 30 is to accommodate the expander 14. The restricted width of the opening 34 is to guard against inadvertent dislodgement of the expander 14, once installed, from the hollow 30. As apparent from e.g. Figs. and 3 of the drawings, the restricted width of the opening 34 is gained by a thickening or enlargement of the free end portions of the limbs 32.

As shown, the expandable gripper 12 has an approximately C-shaped cross-section. It could have a generally U- or V-shaped cross-section. In principle, the sectional form of the gripper 12 could take any convenient form suiting the shape of the channel 16, consistent with the development of an adequate slippage-free sheet clamping or gripping effect.

Gripper 12 is made of a resilient material and so configured that its limbs 32 can be moved apart into a sheet-gripping relationship with the sides or surface of the channel 16. It should be resilient enough to be compressed or collapsed sufficiently for it to be forced through the mouth 20 of the body 10 and into the channel 16. Plastics, plastics rubbers and natural rubber comprise a range of suitable materials possessing desirable elastomeric and frictional characteristics.

The expander 14 can be a simple circularly sectioned member made from similar materials as just mentioned for the gripper 12. It may be somewhat harder. Its cross-sectional dimensions are oversized relative to the internal hollow 30 of the gripper 12, as necessary for it to expand the latter firmly against the sides or surface of the body channel 16.

The expander, though shown of circular cross-section, could have other shapes suiting the chosen shape of the hollow 30.

As stated previously, bodies 10 according to the invention can take any desired external shape, and they can include more than one channel 16 and access mouth 20. One example is shown in Fig. 2. The body here is metal and has a generally tubular extruded form with a plurality of channels (four) and corresponding access mouths. This form of body may have marine applications but is primarily intended for use in scaffolding erections. Another example is shown in Fig. 3. Again, it is a metal extrusion and this time is primarily meant for affixing to trucks for securing load-covering sheeting. A similar construction to Fig. 3 can be employed in or as framing for temporary or permanent building structures e.g. tunnel-type growing houses for horticulture.

In use, the body 10 of the fastening means will be secured as appropriate for the application. For example, it may be mounted as part of a scaffold erection, to a suitable support on a vehicle, to framing elements of a building structure and the like.

The sheet to be secured and the elements of the fastening means are assembled in the order apparent from Fig. 1. First, the sheet 24 is laid upon the body 10. The sheet may be so arranged that the body 10 extends adjacent an edge of the sheet or somewhere remote from an edge, e.g. across the middle of the sheet. The sheet 24 is then pushed or tucked into the channel 16. This can be done with the fingers or with the help of a simple handtool e.g. comprising a roller on a handle. The insertion of the sheet 24 can commence at one end of the body 10.

Next, the expandable gripper 12 is introduced into the channel 16, pushing it into place with the fingers or a suitable hand tool. Most conveniently, the gripper is inserted starting at one end of the body 10.

Finally, the expander 14 is inserted into the hollow of the gripper 12, pushing it into place with the fingers or with the aid of a suitable tool. Again, it is most convenient to start at one end of the body. It can be beneficial to stretch the expander longitudinally as it is inserted into the hollow 30 since that will cause the expander's section to contract slightly. When the tension is released, the expander will relax and its girth will return to its normal size developing the desired expanding effecting on the gripper 14.

The sheet 24 when secured, and the three elements 10, 12, 14 of the fastening means, will be disposed as indicated in Figs. 2 and 3, with the inserted part of the sheet 24 gripped between the sides of the channel 16 and the gripper 14.

It will be appreciated that a square or rectangular sheet 24 can be secured along each of its four sides with suitably disposed fastening means according to the invention.

As indicated earlier, the respective shapes of the channel 16, the gripper 12 and expander 14 can be varied. Accordingly, it is not possible to give their respective dimensions. Dimensions can be determined quite readily, however, by routine trial and experiment.

Using the fastening means according to the invention, very secure anchoring of a flexible sheet is possible. If the sheet is subject to a pull in either of the directions arrowed in Fig. 3, the effect will be to jam the gripper 12 tighter against the side of the channel 16 opposite the pull. If the sheet is subjected to pulls in both the arrowed directions, the effect may be to lift the gripper 12 in the channel 16, when the limbs 32 will jam tightly against the inside of the flanges or lips 22. Thus, in either event, a stronger grip is exerted on the sheet 24 assuring a substantially slippage-free retention of the sheet.

Disassembly of the sheet from the fastening means in essence amounts to a reversal of the assembly operation, and has already been described earlier in this specification.

As will be appreciated from the foregoing, the fastening means is susceptible of wide application. The body 10 can be fitted to any convenient support, base or frame, and could itself form a frame e.g. for a building structure such as a tunnel growing house. The body can be formed into curves, well suited to the half-round shape of growing houses. Moreover, it can be bent through relatively small radii, e.g. to form a rounded 90 degree turn. The gripper 12 and expander 14 will be flexible enough to be able to conform to these curves or bends.

A further embodiment of the fastening means according to the invention is depicted in Fig. 4. The fastening means again comprises an e.g. extruded body 10', like the Fig. 3 embodiment possessing two channels, an elastomeric gripper 12' and an expander 14'. The expander has a flanged top to form a cover strip over the assembled fastening means.

Flexible sheet fastening means embodying the invention have numerous applications, some of which are given hereinbefore. Another possible application is for attaching a flexible, decorative skin e.g. fabric to a building board. For this purpose, the body of the fastening means could have a generally H-shaped cross-section. It would be fashioned into a frame to encompass the edges of a board. The section to one side of the cross-piece will provide two flanges between which an edge of the board will be located. To the other side of the cross-piece, the H-shaped body will define the channel to receive the skin or fabric, the gripper and expander, all according to the principles explained hereinbefore. If desired, a resilient foam layer and an outer skin layer can be applied to the board using the fastening means. The body of the fastening means can be extruded or otherwise formed, and can be made readily attachable to a mounting or clip element which in turn is anchored to a substrate. A modular, decorative wall cladding system for building interiors can thereby be produced by use of the invention.

## Claims

1. A flexible-sheet fastening means comprising three elongate interfitting members, namely a body, an expandable gripper and an expander for the gripper, the body having a channel therealong opening to a surface of the body via a restricted mouth which permits flexible sheeting to be tucked into the channel and the gripper and expander to be installed therein, the gripper having an internal hollow to receive the expander and two spaced-apart limbs extending therealong, and the expander being oversized relative to the internal hollow in use for expanding the gripper to deflect its limbs apart into a sheet-gripping relationship with sides of the channel in the body.

2. A fastening means according to claim 1, wherein the body is a rigid plastics or metal member, for example a metal extrusion.

3. A fastening means according to claim 1 or claim 2, wherein either or both of the gripper and the expander is or are made of a resilient material, for example an elastomeric material.

4. A fastening means according to claim 1, 2 or 3, wherein the restricted mouth of the body is defined between a pair of confronting, spaced-apart flanges or lips which extend along the body, and desirably internal and external corners of the flanges or lips are rounded.

5. A fastening means according to any of claims 1 to 4, wherein the channel of the body has a dovetail shape.

6. A fastening means according to any of claims 1 to 5, wherein the expandable gripper has an opening of restricted width leading to its hollow, to guard against inadvertent disengagement of the gripper from the hollow.

7. A fastening means according to any of claims 1 to 6, wherein the internal hollow of the expandable gripper is shaped to accommodate an expander of circular cross-section.

8. A fastening means according to any of claims 1 to 7, wherein the body is a tubular member and has at least one channel as aforesaid.

9. A scaffolding structure for buildings, including scaffold members incorporating the fastening means according to any of claims 1 to 8 and flexible sheeting secured thereto to form a temporary screen of the facade of a building.

10. A building structure comprising a framework and a flexible sheet covering, the framework incorporating the fastening means according to any of claims 1 to 8 by which the sheet covering is secured in place.

11. A goods vehicle including a load platform operatively associated with which there is the fastening means according to any of claims 1 to 8, for fastening a load-covering sheeting over a load carried by the platform.

12. A method of fastening flexible sheeting employing fastening means according to any of claims 1 to 8, wherein sheeting is laid across the mouth of the body and is tucked into the channel, for example commencing at one end of the body, the expandable gripper is pushed into the channel, for example progressively from one end, with its limbs projecting toward the mouth, and the expander is inserted, for example progressively from one end, into the hollow between the limbs to expand the gripper into a secure, sheet-gripping relationship with the channel.

13. A method according to claim 12, wherein the expander is elastomeric, and is tensioned lengthwise in the course of inserting it into the hollow so that, when the tension is released and the expander relaxes, its girth increases thereby enhancing the expansion of the gripper.

Fig.1.

Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 641 789 (RUP)<br>* Page 3, paragraph 1 - page 4, line 3; page 6, line 24 - page 8, lines 19; figures 1,2 * | 1-8,10, 12,13 | F 16 B   5/06   //<br>E 04 G   1/26<br>E 04 H  15/64<br>B 60 P   7/04 |
| Y | | 9 | |
| Y | DE-A-3 716 552 (EYERICH)<br>* Column 3, lines 26-32; figures 1,2 * | 9 | |
| A | US-A-3 165 110 (BROOKS)<br>* Column 4, line 40 - column 5, line 23; figures 1,9,10 * | 10,12, 13 | |
| A | DE-A-2 521 516 (AKSJESELSKAPET MIKRO-ELEKTRONIKK)<br>* Claim 1; figures 2a,2b * | 13 | |
| A | EP-A-0 082 060 (NAUTIX SARL)<br>* Page 5, lines 22-32; figures 1,2 * | 13 | |
| X | FR-A-2 381 934 (REBILLARD)<br>* page 1, line 15 - page 2, line 3; all figures * | 1-4,11, 12 | TECHNICAL FIELDS SEARCHED (Int. Cl.5) |
| X | FR-A-2 575 243 (FILCLAIR)<br>* Page 2, line 33 - page 4, line 24; figures 1-3 * | 1-4,10, 12 | F 16 B<br>E 04 H<br>E 04 G<br>B 60 J<br>B 60 P |
| X | DE-A-2 208 822 (BENKERT)<br>* Page 7, lines 1-15; figures 3,4 * | 1-5,8 | |

The present search report has been drawn up for all claims

| Place of search | Date of completion of the search | Examiner |
|---|---|---|
| THE HAGUE | 06-06-1990 | CALAMIDA G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
....................................................................
& : member of the same patent family, corresponding
   document

EPO FORM 1503 03.82 (P0401)